# EUROPEAN PATENT APPLICATION

(11) **EP 4 823 227 A1**
(43) Date of publication of application: **14.10.2026**
(21) Application number: 25178341.1
(22) Date of filing: 22.05.2025
(51) Int. Cl.: H04W 76/19

(54) **ELECTRONIC APPARATUS AND COMMUNICATION METHOD THEREOF**

(30) Priority: 09.04.2025 CN 202510441183
(71) Applicant: Moxa Inc., 242032 New Taipei City (TW)
(72) Inventor: CHEN, Chih-Yang, 242032 NEW TAIPEI CITY (TW)
(74) Representative: Casalonga

(57) **Abstract**

An electronic apparatus includes: a wireless communication device having a wireless connection ability based on a first frequency band and a wireless connection ability based on a second frequency band different from the first frequency band; and a computing device communicating with a first or second base station via the wireless communication device. After the wireless communication device establishes a first radio link based on the first frequency band with a first base station, the electronic apparatus disables the wireless connection ability of the wireless communication device based on the first frequency band when the first radio link is faulty, such that the wireless communication device switches to the second frequency band to establish a second radio link with the second base station.

## Description

### TECHNICAL FIELD

The present application relates to an electronic apparatus, and more particularly to an electronic apparatus able to quickly restore communication when a radio link is faulty.

### BACK GROUND

In wireless communications, when user equipment (UE) is about to enter a state of radio link failure (RLF), information from a base station (BS) may not be properly received due to disappearance or weakening of signals. In such case, the UE monitors for the possibility whether the signals will recover within a certain period of time (for example, 2 s, which is specifically dependent on network configurations). During this period of time, the user equipment is unable to transmit to or receive from the base station any messages. Such temporary loss of connection results in communication instability. Moreover, for some applications having higher requirement for the communication stability, a system may have to be restarted once out-of-sync between the UE and a base station exceeds a certain period of time (for example, 1 s), causing a burden on the system.

In actual applications, a base station may reduce a determination process of RLF by means of adjusting a detection time parameter. A shorter determination time helps a wireless communication device to quickly determine RLF and perform cell selection in order to restore the network connection, thereby reducing the time of communication interruption. However, the approach above may also increase the number of times that the UE performs cell selection, leading to an increase in the burden of the network. In addition, since the base station needs to provide services to multiple different applications, such approach of adjusting detection time parameters for only certain applications is not considered cost-effective. Therefore, how to quickly re-establish wireless communications in the event of out-of-sync between UE and a base station has become one critical issue in the optimization of communication systems.

### SUMMARY

An electronic apparatus is disclosed according to an embodiment of the present application. The electronic apparatus is arranged in a region in which a first base station provides wireless access services based on a first frequency band and a second base station provides wireless access services based on a second frequency band, wherein the first frequency band is different from the second frequency band. The electronic apparatus includes a wireless communication device and a computing device. The wireless communication device has a wireless connection ability based on the first frequency band and a wireless connection ability based on the second frequency band. The computing device is coupled to the wireless communication device, and is configured to communicate with the first base station or the second base station via the wireless communication device. After the wireless communication device establishes a first radio link based on the first frequency band with the first base station, the electronic apparatus disables the wireless connection ability of the wireless communication device based on the first frequency band when the first radio link is faulty, such that the wireless communication device switches to the second frequency band to establish a second radio link with the second base station.

A communication method of an electronic apparatus is disclosed according to another embodiment of the present application. The electronic apparatus includes a wireless communication device, which has a wireless connection ability based on a first frequency band and a wireless connection ability based on a second frequency band. The communication method of an electronic apparatus includes: the first base station providing wireless access services based on the first frequency band to a first region, the second base station providing wireless access services based on the second frequency band to a second region, wherein the electronic apparatus being arranged in an overlapping region of the first region and the second region, the wireless communication device establishing a first radio link based on the first frequency band with the first base station, and the electronic apparatus disabling the wireless connection ability of the wireless communication device based on the first frequency band when the first radio link is faulty, such that the wireless communication device switches to the second frequency band to establish a second radio link with the second base station.

With the electronic apparatus and the communication method of an electronic apparatus disclosed by the present application, in a service environment supporting wireless access of multiple frequency bands, the electronic apparatus is able to disable a frequency band by which the wireless communication device currently uses for establishing a radio link with a base station when the radio link is faulty, such that the wireless communication device is able to quickly switch to another frequency band to establish a new radio link with another base station without having to wait for determination of a radio link failure.

### BRIEF DESCRIPTION OF THE DRAWINGS

The details of the present application will be more readily understandable by way of reading the embodiments with the accompanying drawings below. It should be noted that, according to standard practice in industry, the various features in the drawings are not necessarily drawn to scales. In fact, for clear illustrations, dimensions of some features may be intentionally enlarged or reduced.
FIG. 1 is a schematic diagram of a communication system according to a comparison embodiment of the present application;
FIG. 2 is an operation timing diagram of the user equipment (UE) in FIG. 1 according to the 3GPP standards when a radio link is faulty;
FIG. 3 is a schematic diagram of a communication system according to an embodiment of the present application;
FIG. 4 is a flowchart of a communication method of an electronic apparatus according to an embodiment of the present application;
FIG. 5 to FIG. 7 are operation scenarios of an electronic apparatus according to an embodiment of the present application; and
FIG. 8 is an operation timing diagram of the electronic apparatus in FIG. 3 when a radio link is faulty.

### DETAILED DESCRIPTION

In the description below, various embodiments or examples are disclosed to enable implementation of different features of the present application. Specific examples of parameter values, components and configurations enumerated in the description below are intended for simplifying the present application. It is conceivable that the details of the description provide merely examples and are not to be construed as limitations to the present application. For example, in the description of the present application, numerals and/or symbols of components may be repeatedly used in the embodiments. Such repetition of the numerals and/or symbols is for the sake of brevity and clarity and does not necessarily represent relations of the various embodiments and/or configurations discussed herein.

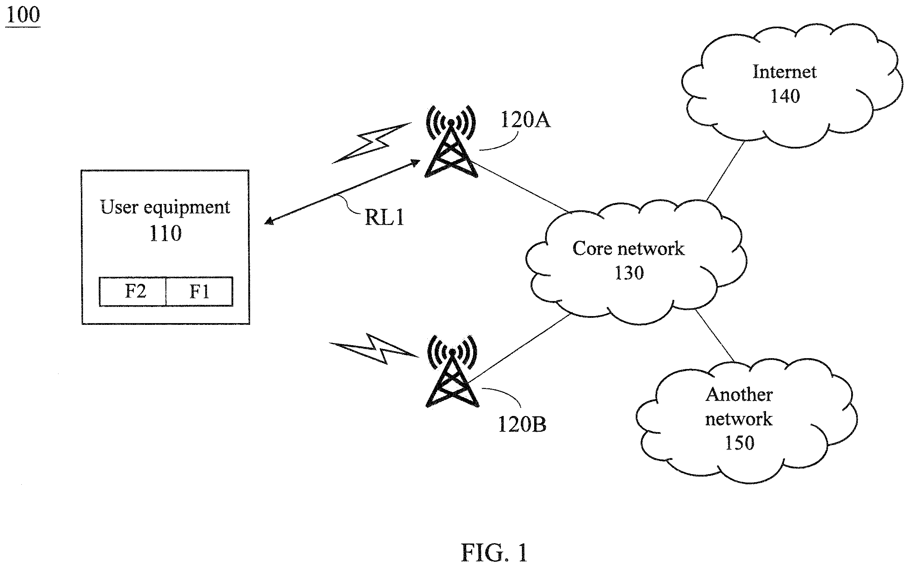

FIG. 1 shows a schematic diagram of a communication system 100 according to a comparison embodiment of the present application. The communication system 100 includes a user equipment (UE) 100, base stations 120A and 120B, and a core network 130. In the communication system 100, the UE 110 may establish a wireless connection with the base station 120A or 120B to access the core network 130, and may connect to an Internet 140 or other networks 150 via the core network 130 for data transmission.

In the embodiment in FIG. 1, the base stations 120A and 120B may provide wireless access services based on different frequency bands. For example, the base station 120A may provide wireless access services based on a first frequency band F1, and the base station 120B may provide wireless access services based on a second frequency band F2 different from the first frequency band F1. Moreover, the UE 110 may have a wireless connection ability based on the first frequency band F1 and a wireless connection ability based on the second frequency band F2. Thus, as shown in FIG. 1, when the UE 110 is located within a service region of the base stations 120A and 120B (that is, an overlapping region of a service region of the base station 120A and a service region of the base station 120B) and has not yet established any wireless connection with any base station, the UE 110 may perform a cell selection based on, for example, factors such as signal strength, quality or network configuration, so as to select a cell serviced by the base station 120A or a cell serviced by the base station 120B as a primary cell for wireless connection.

In FIG. 1, the UE 110 chooses to perform wireless connection with the base station 120A, and establishes a radio link RL1 based on the first frequency band F1 with the base station 120A. However, in some cases, the communication quality of the radio link RL1 may vary. For example, in case of an obstacle appearing between the UE 110 and the base station 120A, or that the UE 110 has moved to a position unfavorable for receiving wireless signals sent by the base station 120A, or a failure occurring in the base station 120A, the strength of signals received by the UE 110 may be reduced to a level that cannot be identified, causing out-of-sync of the radio link RL1. At this point in time, the UE 110 may not be capable of performing data transmission with the base station 120A.

According to communication standards published by 3rd Generation Partnership Project (3GPP), in response to out-of-sync of the radio link RL1 between the UE 110 and the base station 120A, the UE 110 may activate a series of operations to determine whether a radio link failure (RLF) has occurred, and may perform the cell selection again upon determining that the radio link failure has occurred so as to attempt to establish a wireless connection with an appropriate base station (for example, the base station 120B).

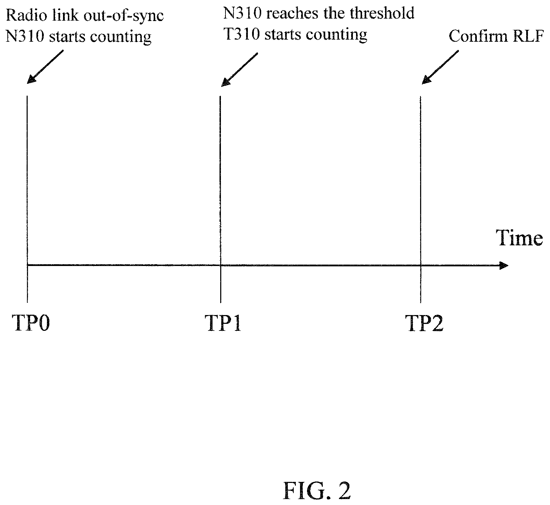

FIG. 2 shows an operation timing diagram of the UE 110 in FIG. 1 according to the 3GPP standards when a radio link becomes faulty. As shown in FIG. 2, when out-of-sync occurs in the radio link RL1 between the UE 110 and the base station 120A (for example, at a time point TP0), the UE 110 may activate a radio link out-of-sync counter (or referred to as N310), which may be used to count the number of times of out-of-sync of the radio link. When the number of out-of-sync recorded by N310 has reached a predetermined threshold (for example, at a time point TP1), the UE 110 may further activate a radio link failure timer (or referred to as T310). Once T310 is activated, T310 starts counting a time duration for which the radio link RL1 has not yet restored to a stable state. When the time period recorded by T310 has reached a predetermined time duration (for example, at a time point TP2), it means that the radio link RL1 has remained unable to restore to a stable state for a considerable time period. At this point in time, the UE 110 determines that a radio link failure has occurred, and starts performing a new round of cell selection to attempt to restore the wireless connection.

That is to say, according to the 3GPP standards, when the radio link RL1 cannot operate normally due to some reasons, the UE 110 has to wait till the count of N310 has reached the threshold and T310 is timed out before it can be determined that a radio link failure has occurred, and then starts establishing a wireless connection with another base station. However, the series of processes above may be overly lengthy for applications with specific requirements for network connection. For example, from the time that the radio link RL fails and cannot operate normally to the time that the UE 110 determines the event of the radio link failure is generally about 2 seconds (which is the total time period for which the UE 110 waits for the count of N310 to reach the threshold and the count of T310 to reach a threshold time duration, that is, a time period from the time point TP0 to the time point TP2). However, in some applications, it is possible that a host employing the network connection via the UE 110 triggers a restart mechanism when the state without network connection exceeds 1 second. In such case, the determination process of the radio link failure according to the 3GPP standards cause difficulties to the normal operations of the host which employs the network connection via the UE 110.

In general, parameters such as the threshold of N310 and the threshold time duration of T310 may be set by communication providers that operate the base stations 120A and 120B. However, since the communication providers need to service various users, it can be challenging in practical to set parameters according to specific user requirements, thereby making the wireless access services accepted by the users less flexible.

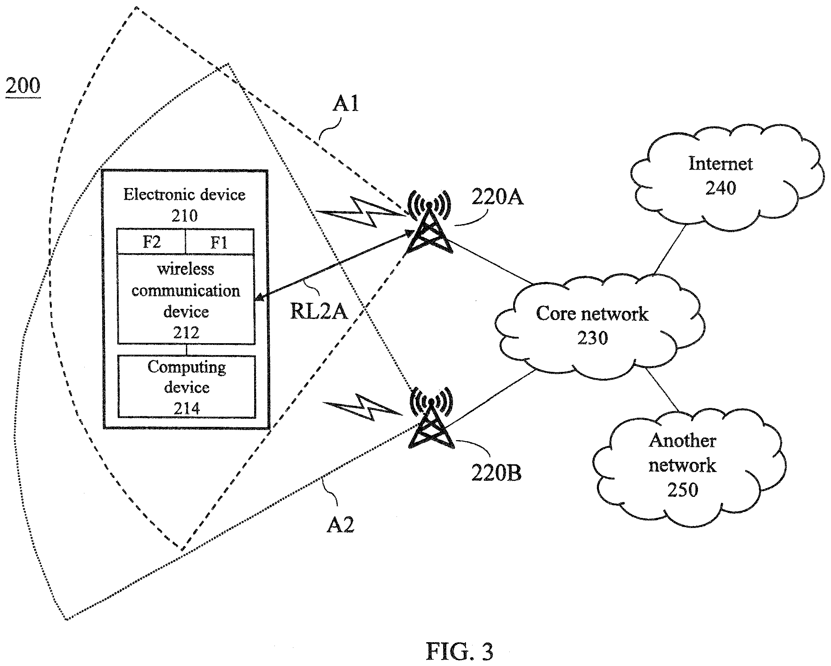

FIG. 3 shows a schematic diagram of a communication system 200 according to an embodiment of the present application. The communication system 200 includes an electronic apparatus 210, base stations 220A and 220B and a core network 230. In the communication system 200, the base station 220A and the base station 220B are coupled to the core network 230, and the electronic apparatus 210 is located within an overlapping region of a service region A1 of the base station 220A and a service region A2 of the base station 220B. Thus, the electronic apparatus 210 is able to establish a wireless connection with the base station 220A or 220B, so as to access the core network 230 to perform data transmission and further be connected to an Internet 240 or another network 250 via the core network 230.

In the present embodiment, the electronic apparatus 210 may include a wireless communication device 212 and a computing device 214. The wireless communication device 212 at least has a wireless connection ability based on the first frequency band F1 and a wireless connection ability based on the second frequency band F2. The computing device 214 may perform data computation or data processing, and communicate with the base station 220A or 220B via the wireless communication device 212. For example, the computing device 214 may be, for example, a computer, an industrial computer (IPC) or other devices with computing abilities, and may include, for example but not limited to, a central processing unit (CPU), a microprocessor, a microcontroller, a field programmable gate array (FPGA) unit, a graphics processing unit (GPU) or a customized integrated circuit (IC). In some embodiments, the wireless communication device 212 may be, for example, a network card, and may be connected to the computing device 214 by means of card insertion. Alternatively, the wireless communication device 212 may also be, for example, a mobile modem, and may be connected to the computing device 214 via an Ethernet interface or Wi-Fi. Moreover, in some embodiments, the wireless communication device 212 and the computing device 214 may also be arranged in the same hardware, and in such case, the single hardware can have both the wireless communication ability and the computing ability. For example, the wireless communication device 212 and the computing device 214 may be integrated in a System-on-Chip (SoC) or a System-in-Package (SiP). In such case, the wireless communication device 212 and the computing device 214, without needing card insertion or external connection in between, are able to effectively collaborate with each other based on connections inside a chip or a package. However, the present application is not limited to the aspects and configurations of the wireless communication device 212 and the computing device 214 above.

Specifically, after the wireless communication device 212 establishes a wireless connection with the base station 220A or 220B, the base station 220A or 220B would allow the electronic apparatus 210 to access the core network 230, such that the electronic apparatus 210 is able to communicate with base stations, apparatuses or networks (for example, the Internet 240 or the another network 250) connected to the core network 230. For example, the electronic apparatus 210 may obtain data to be processed from another remote device via the core network 230, or may transmit the processed data to another remote device via the core network 230. In the present embodiment, the base stations 220A and 220B may be evolved Nodes B (eNBs) of a 3GPP Long Term Evolution (LTE) network or g Nodes B (gNBs) of 5G New Radio (NR). In some embodiments, a base station is also referred to as an access point, an access terminal, or other terms used in this field. It should be noted that, the concept of the present application is described according to the 4G and 5G communication protocols or base stations; however, the present application is not limited to 4G or 5G communication systems and may be extended to other systems.

In some embodiments, the electronic apparatus 210 or the wireless communication device 212 may be considered as the UE in the communication system 200. However, the electronic apparatus 210 is different from the UE 110 shown in FIG. 1 in that, upon detecting that a radio link with a base station becomes faulty, the electronic apparatus 210 may disable a frequency band which the wireless communication device 212 currently uses to establish the radio link, such that the wireless communication device 212 is able to quickly switch to another frequency band to establish a new radio link with another base station without having to wait for determination of a radio link failure.

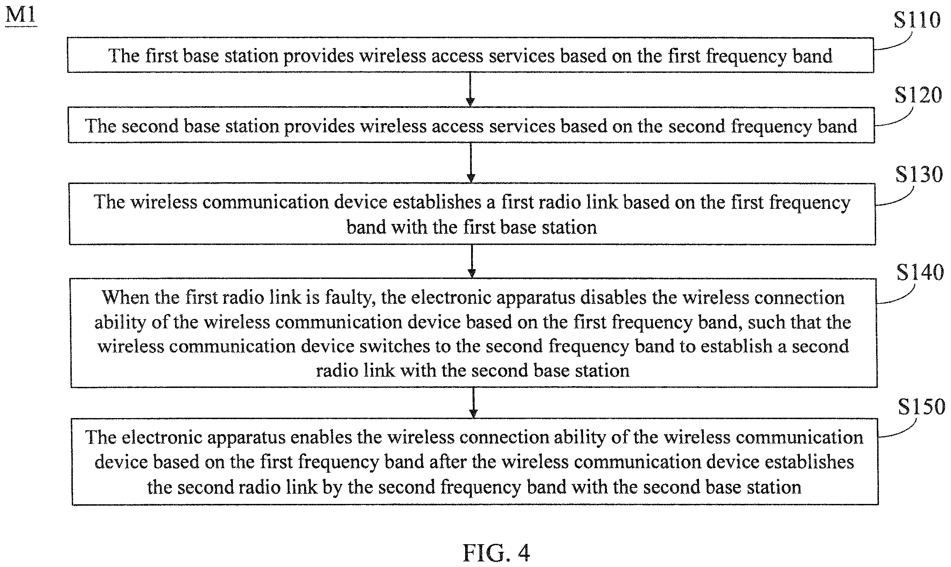

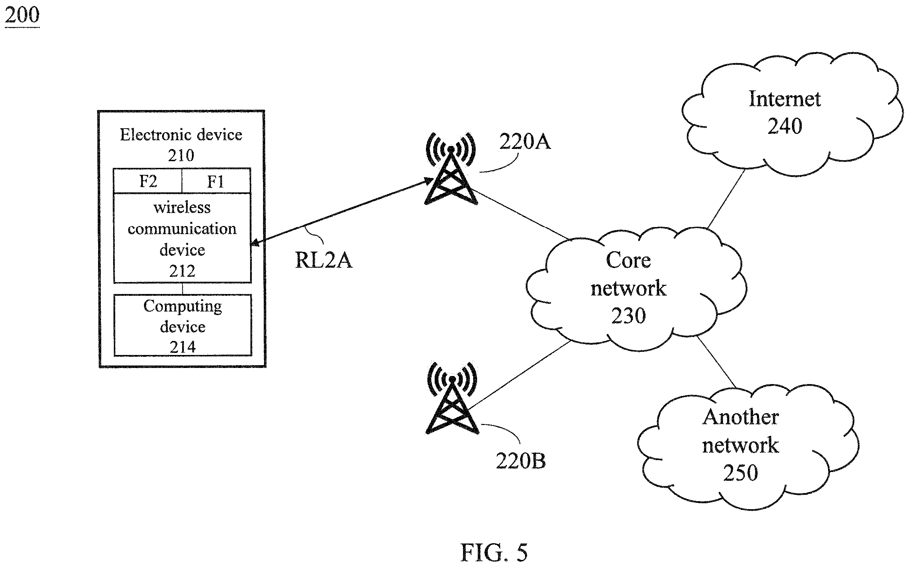

FIG. 4 shows a flowchart of a communication method M1 of the electronic apparatus 210 according to an embodiment of the present application. The method M1 includes steps S110 to S150. FIG. 5 to FIG. 7 show operation scenarios of the electronic apparatus 210 according to an embodiment of the present application.

In steps S110 and S120, the base station 220A may provide wireless access services based on the first frequency band F1 to the first region A1, and the base station 220B may provide wireless services based on the second frequency band F2 to the second region A2. Since the electronic apparatus 210 is located within an overlapping region of the region A1 and the region A2, the electronic apparatus 210 is able to establish wireless connection with an appropriate base station by means of cell selection. In step S130, the electronic apparatus 210 may, for example, establish a radio link RL2A based on the first frequency band F1 with the base station 220A, as shown in FIG. 5. In such case, the computing device 214 in the electronic apparatus 210 may access the core network 230 via the radio link RL2A to perform data transmission via the network.

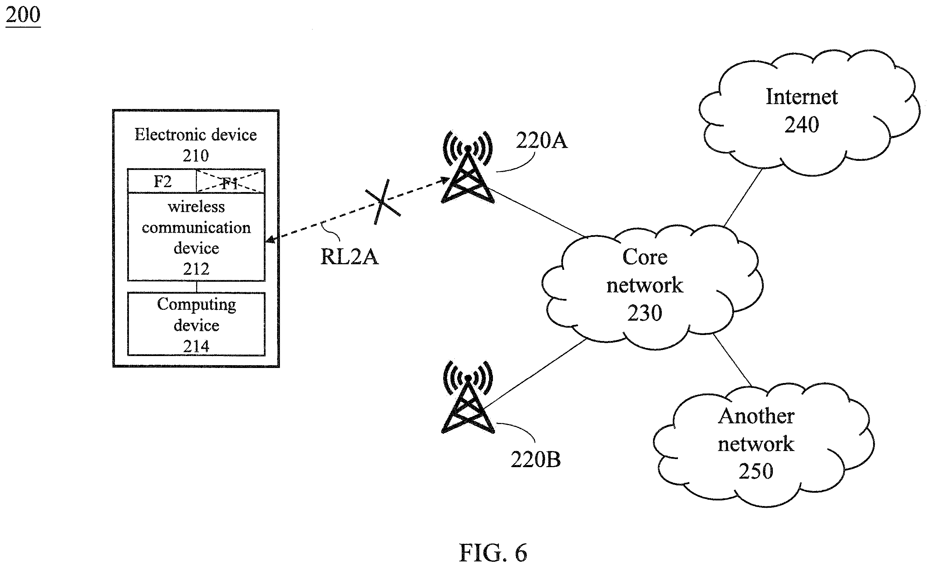

However, in FIG. 6, due to some reasons, a failure has occurred in the radio link RL2A established between the electronic apparatus 210 and the base station 220A, such that the electronic apparatus 210 is unable to transmit data to the exterior. In such case, according to the 3GPP standards above, the wireless communication device 212 activates mechanisms including N310 and T310 to determine whether the radio link RL2A fails. In the present embodiment, during the process of activating N310 or T310, the electronic apparatus 210 may further perform step S140 to disable the wireless connection ability of the wireless communication device 212 based on the first frequency band F1. Thus, the wireless communication device 212 does not continue with the operation for determining whether the radio link RL2A fails as described in FIG. 2, but directly performs cell selection based on a non-disabled frequency band so as to attempt to re-establish a wireless connection.

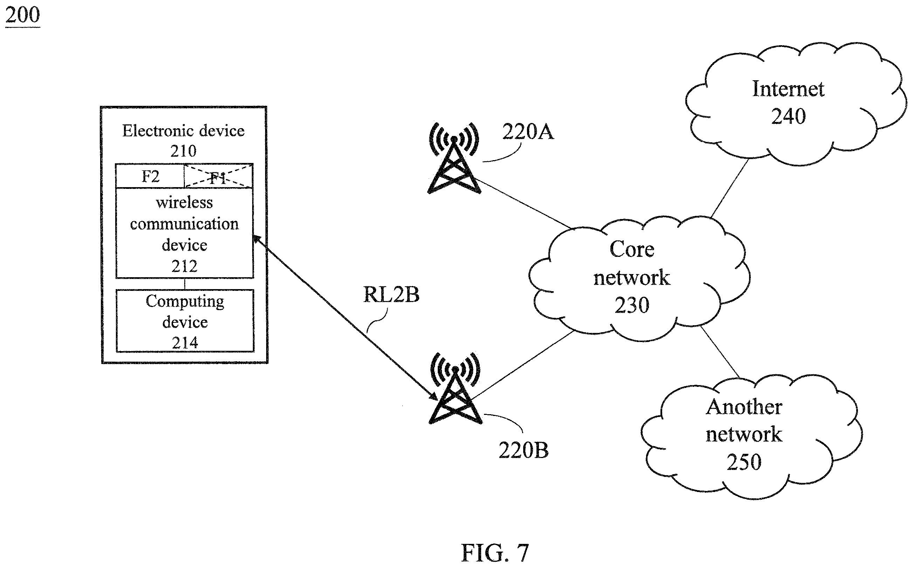

As shown in FIG. 7, after the wireless connection ability of the wireless communication device 212 based on the first frequency band F1 is disabled, the wireless communication device 212 can then quickly switch to the second frequency band F2 to establish a radio link RL2B with the base station 220B. Moreover, after the wireless communication device 212 establishes the radio link RL2B by the second frequency band F2 with the base station 220B, the electronic apparatus 210 may further perform step S150 to enable the wireless connection ability of the wireless communication device 212 based on the first frequency band F1, so as to respond to subsequent changes in the communication system 200.

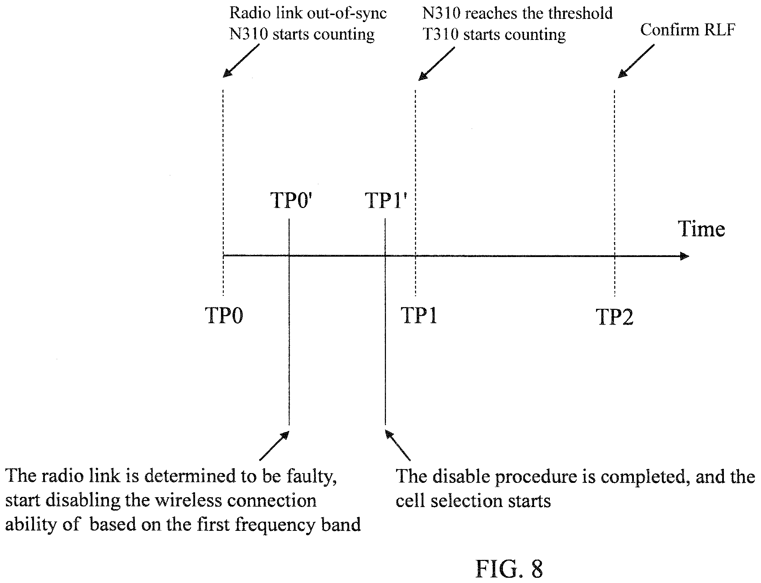

FIG. 8 shows an operation timing diagram of the electronic apparatus 210 in FIG. 3 when a radio link is faulty. In FIG. 8, the parts depicted with solid lines indicate operation timings of the electronic apparatus 210 when the radio link RL2A becomes faulty. For ease of comparison, FIG. 8 also indicates the operation timings when the radio link RL1 is out-of-sync based on the 3GPP standards by the parts depicted with dashed lines. As shown in FIG. 8, the electronic apparatus 210 determines that the radio link RL2A is faulty at the time point TP0', and starts disabling the wireless connection ability of the wireless communication device 212 based on the first frequency band F1. The disable procedure is then completed at the time point TP1'. Thus, starting from the time point TP1', the electronic apparatus 210 may perform cell selection based on another supported frequency band (for example, the second frequency band F2) other than the first frequency band F1, so as to establish a wireless connection with another base station (for example, the base station 220B). In general, a time period from the wireless communication device 212 starts disabling the wireless connection ability based on the first frequency band F1 to the wireless communication device 212 completes disabling the wireless connection ability based on the first frequency band F1 (a time period from the time point TP0' to the time point TP1') is about within 300 ms. Thus, compared with the case where the UE 110 has to wait from the time point TP0 to the time point TP2 before it can restart cell selection to establish a wireless connection with another base station, the electronic apparatus 210 is able to more quickly re-access the core network 230 when the radio link RL2A is faulty.

In some embodiments, the computing device 214 may read communication data associated with the radio link RL2A from the wireless communication device 212, and determine the state of the radio link RL2A according to the read communication data. When the computing device 214 determines that the radio link RL2A is faulty, the computing device 214 may transmit a disable command to the wireless communication device 212 to cause the wireless communication device 212 to disable the wireless connection ability based on the first frequency band F1. In some embodiments, the computing device 214 may determine that the radio link RL2A is faulty upon detecting that continuous out-of-sync of the radio link RL2A has reached a predetermined number of times. Moreover, in some embodiments, the number of times of out-of-sync that the computing device 214 sets for determining the faultyity of the radio link RL2A may be less than the threshold corresponding to N310. Thus, at the time point TP0' before the time point TP1 at which N310 has reached the threshold, the electronic apparatus 210 may start disabling the wireless connection ability of the wireless communication device 212 based on the first frequency band F1, such that the wireless communication device 212 is able to perform cell selection earlier, thereby accelerating the speed at which the electronic apparatus 210 can restore data transmission. However, the present application is not limited to the aforementioned condition for determining the faultyity of the radio link RL2A. In some embodiments, the computing device 214 may also determine whether the radio link RL2A is faulty by using other conditions according to requirements. It should be noted that, the electronic apparatus 210 should appropriately set the condition for determining whether a radio link is faulty to ensure that step S140 can be completed before the time duration counted by T310 has not yet reached the threshold time duration sufficient for determining a radio link failure. That is to say, the electronic apparatus 210 should ensure that the time point TP1' is earlier than the time point TP2, so as to ensure that the electronic apparatus 210 is able to more quickly restart cell selection than the determination process of RLF specified by the 3GPP standards and restore the connection between the electronic apparatus 210 and the core network 230.

In addition, in some embodiments, the step of determining whether the radio link RL2A is faulty so as to disable the wireless connection ability based on the first frequency band F1 may also be performed by the wireless communication device 212. For example, the wireless communication device 212 may include a processor (not shown in the drawings), and the processor in the wireless communication device 212 may perform a corresponding process to determine whether the radio link RL2A is faulty, and initiatively disable the wireless connection ability based on the first frequency band F1 when it determines that the radio link RL2A is faulty.

In summary, with the electronic apparatus and the communication method of the electronic apparatus provided by the embodiments of the present application, in a service environment supporting wireless access of multiple frequency bands, the electronic apparatus is able to disable a frequency band by which the wireless communication device in the electronic apparatus currently uses for establishing a radio link with a base station when the radio link becomes faulty, such that the wireless communication device is able to quickly switch to another frequency band to establish a new radio link with another base station without having to wait for determination of a radio link failure.

The features of some embodiments of the present application are described in brief above for a person skilled in the art to more comprehensively understand various aspects of the present application. On the basis of the disclosure of the present application, it would be easy for a person skilled in the art to design or modify other processes and structures, so as to achieve the same objects and/or the same advantages of the embodiments described herein. A person skilled in the art would be able to understand that these equivalent implementation forms still fall within the spirit and scope of the disclosure of the present application, and various changes, replacements and alterations may be made to the implementation forms without departing from the spirit and scope of the disclosure of the present application.

## Claims

1. An electronic apparatus, arranged in a region in which a first base station provides wireless access services based on a first frequency band and a second base station provides wireless access services based on a second frequency band, wherein the first frequency band is different from the second frequency band; the electronic apparatus comprising:
a wireless communication device, having a wireless connection ability based on the first frequency band and a wireless connection ability based on the second frequency band; and
a computing device, coupled to the wireless communication device, and configured to communicate with the first base station or the second base station via the wireless communication device,
wherein after the wireless communication device establishes a first radio link based on the first frequency band with the first base station, the electronic apparatus is configured to disable the wireless connection ability of the wireless communication device based on the first frequency band when the first radio link is faulty, such that the wireless communication device switches to the second frequency band to establish a second radio link with the second base station.

2. The electronic apparatus of claim 1, further configured to enable the wireless connection ability of the wireless communication device based on the first frequency band after the wireless communication device establishes the second radio link by the second frequency band with the second base station.

3. The electronic apparatus of claim 1, wherein the computing device is further configured to read communication data of the first radio link, determine a state of the first radio link according to the communication data, and transmit a disable command to the wireless communication device upon determining that the first radio link is faulty to cause the wireless communication device to disable the wireless connection ability based on the first frequency band.

4. The electronic apparatus of claim 1, wherein the wireless communication device is configured to initiatively disable the wireless connection ability of the first frequency band upon determining that the first radio link is faulty.

5. The electronic apparatus of claim 1, wherein the wireless communication device is connected to the computing device by means of card-insertion or is connected to the computing device by means of an Ethernet interface.

6. The electronic apparatus of claim 1, wherein the wireless communication device and the computing device are arranged in a same hardware.

7. The electronic apparatus of claim 1, wherein the wireless communication device comprises:
a radio link out-of-sync counter, configured to count a number of times of out-of-sync of the first radio link; and
a radio link failure timer, configured to start counting a time duration for which the first radio link has not yet restored to a stable state when the number of times of out-of-sync has reached a threshold,
wherein the electronic apparatus, before the time duration counted by the radio link failure timer has reached a threshold time duration sufficient for determining a radio link failure, disables the wireless connection ability of the wireless communication device based on the first frequency band, and causes the wireless communication device to switch to the second frequency band to establish a second radio link with the second base station.

8. The electronic apparatus of claim 1, wherein both of the first base station and the second base station are coupled to a core network, and the electronic apparatus accesses the core network by the first base station when the wireless communication device establishes the first radio link with the first base station.

9. The electronic apparatus of claim 1, further configured to determine that the first radio link is faulty upon detecting that continuous out-of-sync of the first radio link has reached a predetermined number of times.

10. A communication method of an electronic apparatus, the electronic apparatus comprising a wireless communication device, the wireless communication device having a wireless connection ability based on a first frequency band and a wireless connection ability based on a second frequency band; the method comprising:
a first base station providing wireless access services based on the first frequency band to a first region;
a second base station providing wireless access services based on the second frequency band to a second region, wherein the electronic apparatus is arranged in an overlapping region of the first region and the second region;
the wireless communication device establishing a first radio link based on the first frequency band with the first base station; and
when the first radio link is faulty, the electronic apparatus disabling the wireless connection ability of the wireless communication device based on the first frequency band, such that the wireless communication device switches to the second frequency band to establish a second radio link with the second base station.

11. The communication method of claim 10, further comprising:
the electronic apparatus enabling the wireless connection ability of the wireless communication device based on the first frequency band after the wireless communication device establishes the second radio link by the second frequency band with the second base station.

12. The communication method of claim 10, wherein the electronic apparatus further comprises a computing device; the method further comprising:
the computing device reading communication data of the first radio link from the wireless communication device; and
the computing device determining a state of the first radio link according to the communication data,
wherein when the first radio link is faulty, the step of the electronic apparatus disabling the wireless connection ability of the wireless communication device based on the first frequency band, such that the wireless communication device switches to the second frequency band to establish the second radio link with the second base station, comprises:
the computing device transmitting a disable command to the wireless communication device upon determining that the first radio link is faulty to cause the wireless communication device to disable the wireless connection ability based on the first frequency band.

13. The communication method of claim 10, wherein the wireless communication device is configured to initiatively disable the wireless connection ability of the first frequency band upon determining that the first radio link is faulty.

14. The communication method of claim 10, further comprising:
the wireless communication device counting a number of times of out-of-sync of the first radio link by a radio link out-of-sync counter; and
the wireless communication device starting to count, by a radio link failure timer, a time duration for which the first radio link has not yet restored to a stable state, when the number of times of out-of-sync has reached a threshold,
wherein when the first radio link is faulty, the step of the electronic apparatus disabling the wireless connection ability of the wireless communication device based on the first frequency band, such that the wireless communication device switches to the second frequency band to establish the second radio link with the second base station, is completed before the time duration counted by the radio link failure timer has reached a threshold time duration sufficient for determining a radio link failure.

15. The communication method of claim 10, wherein the electronic apparatus is further configured to determine that the first radio link is faulty upon detecting that continuous out-of-sync of the first radio link has reached a predetermined number of times.
